# EUROPÄISCHE PATENTSCHRIFT

(11) **EP 0 565 203 B1**
(45) Veröffentlichungstag und Bekanntmachung des Hinweises auf die Patenterteilung: **16.07.2003**
(21) Anmeldenummer: 93201022.6
(22) Anmeldetag: 07.04.1993
(51) Int. Cl.: H04Q 11/04

(54) **Multiplexer für die Daten von Zeitkanälen**
Multiplexer for time slot data
Multiplexeur de données des canaux temporels

(30) Priorität: 07.04.1992 DE 4211671
(43) Veröffentlichungstag der Anmeldung: 13.10.1993
(73) Patentinhaber: Philips Intellectual Property & Standards GmbH, 20099 Hamburg (DE); Koninklijke Philips Electronics N.V., 5621 BA Eindhoven (NL)
(72) Erfinder: Wahl, Hans-Dieter, c/o Philips Patentverwaltung, W-2000 Hamburg 1 (DE)
(74) Vertreter: Volmer, Georg, Dipl.-Ing.

(56) Entgegenhaltungen:
- EP-A- 0 119 843
- EP-A- 0 173 274
- DE-A- 3 726 359
- ELECTRICAL COMMUNICATION., Bd.59, Nr.1/2, 17. Dezember 1984, BRUSSELS BE Seiten 131 - 136 S.R. TREVES 'System 12 - Technique for Wideband ISDN Applications'

## Beschreibung

Die Erfindung bezieht sich auf einen Multiplexer für die Daten von Zeitkanälen, die kanalweise nach Rahmen und/oder Mehrfachrahmen strukturiert sind, mit
- Adressiermittel (6, 8), die für die Adressierung eines Hauptspeichers (3) vorgesehen sind, in den die Daten vorbestimmter Kanäle kanalweise geordnet eingeschrieben werden und ausgelesen werden,
- Detektiermittel (11, 13, 13A, 14, 15, 16), die dafür vorgesehen sind, in den Daten, die im Hauptspeicher (3) abgelegt sind, kanalweise die Rahmen und/oder Mehrfachrahmen zu detektieren.

Ein derartiger Multiplexer wird z.B. für Video-Codecs gebraucht, die der CCITT-Empfehlung H.261 genügen und die über ein ISDN-Netz miteinander Daten austauschen. Beim Datenaustausch zwischen Codecs über das ISDN-Netz ergibt sich ein Problem, das den folgenden Ausführungen entnehmbar ist.

Die Bitraten für die Videodaten der Codecs sind von 64 kbit/s bis p*64 kbit/s einstellbar, wobei p ganzzahlig ist und der Einschränkung 2 ≤ p ≤ 30 genügt Da auch noch akustische Signale übertragen werden sollen, sind mindestens zwei ISDN-Basiskanäle von je 64 kbit/s erforderlich, um die Mindestansprüche zu erfüllen, die z.B. an einen Bildtelefonbetrieb gestellt werden. Da jedoch im ISDN-Netz die Kanäle getrennt voneinander automatisch vermittelt werden, kann es sein, daß die beiden Teilsignale mit erheblichen Zeitunterschieden beim gleichen Empfänger eingehen. Laufzeitunterschiede von der Größenordnung bis zu einer Sekunde sind als realistisch anzusehen.

Im einzelnen laufen bei der Übertragung von Daten eines Video-Codecs über ein ISDN-Netz folgende Prozesse ab:
Der Video-Coder gibt zunächst einen nach der H.261-Empfehlung aufgebauten seriellen Datenstrom ab. Dieser Datenstrom hat eine Bitrate von p x 64 kbitls. Durch einen Dcmultiplexer wird dieser Datenstrom auf p Kanäle verteilt und die Daten eines jeden Kanals werden gleichzeitig in Rahmen der CCITT-Empfehlung H.221 eingeordnet. Gegebenenfalls werden auch akustische Daten in die H.221-Rahmen eingeordnet. Im Zeit-Multiplexverfahren werden die Daten eines jeden dieser Kanäle über das ISDN-Netz übertragen, wobei im ungünstigsten Fall die Daten eines jeden Kanals über einen anderen Pfad den Empfänger erreichen. Ein Multiplcxer auf der Empfängerseite hat somit den Zweck, die Laufzeitunterschiede der Kanaldaten so auszugleichen und sie derart zu ordnen, daß ein Zusammensetzen zu dem ursprünglichen seriellen Datenstrom möglich ist. Schaltungsanordnungen, mit denen die Laufzeitunterschiede zweier B-Kanäle ausgeglichen werden, sind bekannt (The H.221-Muldex Integrated Circuit. CSELT, March 1, 1990). Versuche, mit Signalprozessoren die Laufzeitunterschiede auszugleichen, haben gezeigt, daß schon bei zwei Kanälen die Rechenleistung der üblichen Prozessoren ausgeschöpft ist.

Das Dokument EP-A-0 173 274 beschreibt ein Verfahren und eine Schaltungsanordnung einer Zeitvielfach-Breitbandverbindung für Datenströme, deren Bitfolgefrequenz größer ist als die Bitfolgefrequenz des Datenstroms einer Fernsprechverbindung (64kBit/s). Auf eine Übertragung von akustischen Signalen und Videodaten gleichzeitig wird nicht näher eingegangen. Für eine Übertragung einer Rahmerinummer werden bei diesem Verfahren in den einzelnen Kanälen bei Datenwörtern zu je 16 Bit 5 Bit benötigt. Die zu einer Leitungseinheit kommenden Daten werden von einer Steuereinheit gesteuert, welche einen Zähler aufweist, dessen Inhalt an den dafür vorgesehenen Stellen in den Datenfluß eingefügt wird. Anhand der Rahmennummer wird der Kanal mit der größten Laufzeit ermittelt und für alle übrigen Kanäle wird der Laufzeitunterschied gegenüber dem Kanal mit der größten Laufzeit bestimmt. Die zuvor in einer Speichereinheit eingeschriebenen Daten der einzelnen Kanäle werden anschließend um die so ermittelte Anzahl von Rahmendauern verzögert aus der Speichereinheit ausgelesen, so dass ein Zeitversatz der Kanäle ausgeglichen wird.

Der Erfindung liegt die Aufgabe zugrunde, eine Prinzipschaltung für einen Multiplexer der eingangs genannten Art anzugeben, der die Daten von mehr als zwei Zeitkanälen zusammenfassen kann und dessen konkrete Ausführungsformen mit vertretbarem Aufwand herstellbar sind.

Die Aufgabe wird erfindungsgemäß dadurch gelöst,
dass die für das Einschreiben in den Hauptspeicher vorgesehenen Adressiermittel im Falle der Detektion eines Rahmens in den Daten eines Kanals für diesen Kanal durch die Steuermittel zum Setzen auf einen aus den Detektiermitteln abgeleiteten Stand vorgesehen sind.

Vorteilhafte Ausgestaltungen der Erfindung sind in den Unteransprüchen angegeben.

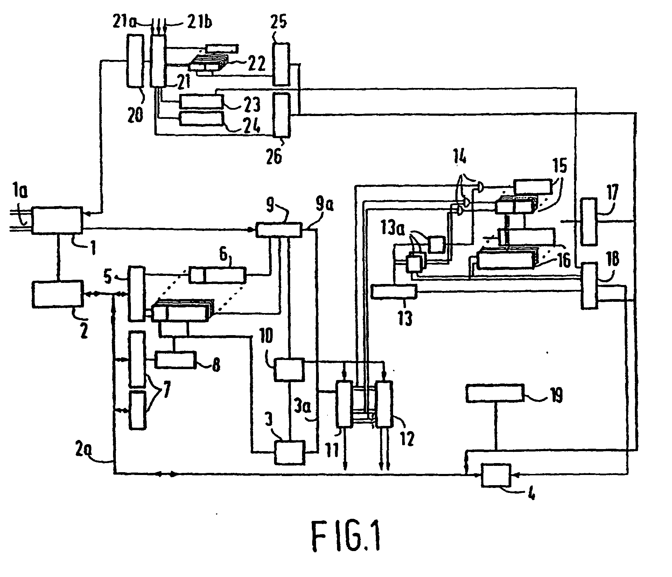

Anhand der Figur 1 soll ein Ausführungsbeispiel der Erfindung näher beschrieben werden.

Mit einer Netzzugangsschaltung 1 wird aus einem ankommenden PCM-30-Signal 1a unter anderem der Bittakt gewonnen, der PCM-30-Rahmen erkannt und die Information des D-Kanals ausgewertet. Im D-Kanal wird z.B. die Information übertragen, in welchen Kanälen des PCM-30-Signals 1a die Videodaten eines sendenden Video-Codecs enthalten sind und in welcher Reihenfolge die Daten dieser Kanäle zum ursprünglichen seriellen Datensignal zusammengesetzt werden sollen. Diese Informationen werden an eine Benutzerschnittstelle 2 weitergegeben und von dort über eine Busleitung 2a an einen Systemprozessor 4 übertragen.

Der Kürze wegen soll im folgenden für eine Leitung, für deren Anschlüsse sowie wie für die Signale, die über diese Leitung übertragen werden, das gleiche Bezugszeichen verwendet werden. Außerdem wird auf die Taktung der Bausteine nicht eingegangen, da die Taktversorgung dem zuständigen Fachmann geläufig ist.

Nach dem vorliegenden Beispiel gehören die Daten von dreißig Kanälen des PCM-30-Signals zu den Daten, die zu einem seriellen Datenstrom zusammengesetzt werden sollen. Nach Durchlaufen der Netzzugangschaltung 1 erreicht das Signal 1a einen internen Demultiplexer 9. Mit Hilfe dieses Demultiplexers 9 werden die Daten der dreißig Kanäle kanal- und byteweise über Verbindungen 9a und 3a in einen Hauptspeicher 3 eingeschrieben. Beim Hauptspeicher 3 handelt es sich um ein RAM mit einer Speicherkapazität von 256 kbyte.

Hilfsmittel zur Kontrolle der Schreib- und Lesevorgänge für den Hauptspeicher 3 sind eine Schreib- und Lesesteuerung 10, dreißig Schreibzähler 6 und ein Lesezähler 8. Die Zähler 6 und 8 erzeugen die Schreib- bzw. Leseadressen für den Hauptspeicher 3. Für die Daten eines jeden der Zeitkanäle, die in den Hauptspeicher 3 eingelesen werden, ist ein achtzehnstufiger Schreibzähler vorgesehen. Die fünf höchstwertigen Stufen dieses Zählers sind unabhängig von den restlichen Stufen verstellbar und werden bei Beginn der Übertragung einmalig gesetzt. Die Binärzahl dieser Stufen gibt die Seitenzahl im Hauptspeicher 3 an, unter denen die Daten eines Zeitkanals abgelegt werden sollen. Die Seitenzahlen sind mit den Kanalnummern (hier dreißig Nummern) identisch. Welcher Zähler auf welche Seitenzahl gesetzt werden soll, ist in den Informationen des D-Kanals und der Inbandsignalisierung enthalten.

Die restlichen dreizehn Stufen eines jeden der Zähler 6 geben die Adressen für die Bytes an, die auf einer Seite des Speichers abgelegt werden. Mit diesen Stufen sind 8192 Speicherstellen adressierbar. Diese Stufen der Zähler werden jedoch schon bei einem Stand von 7679 zurückgesetzt. Der Adreßbereich von null bis 7679 wird folglich zyklisch durchlaufen, sofern die Zyklen nicht durch besondere Eingriffe - vergleiche weiter unten - unterbrochen werden. Aus diesen Angaben folgt insbesondere, daß im Hauptspeicher 3 pro Kanal ein Signalausschnitt von 0,96 Sekunden zwischengespeichert werden kann.

Die Leseadressen erzeugt der achtzehnstufige Lesezähler 8 derart, daß aus dem Hauptspeicher 3 bei seinem tiefsten Stand das erste Byte der ersten Seite ausgelesen wird. Beim nächsthöheren Stand wird das erste Byte der zweiten Seite ausgelesen und so fort bis zum ersten Byte der dreißigsten Seite. Sodann wird mit dem zweiten Byte aller Seiten entsprechend forgefahren bis zum letzten Byte der dreißigsten Seite. Wie sich unschwer erkennen läßt, hat das ausgelesene Signal die Struktur des ursprünglich gesendeten seriellen Datenstroms, sofern kein zeitlicher Versatz zwischen den Daten der einzelnen Zeitkanäle besteht. Gerade mit diesem Versatz muß jedoch - wie anfangs dargelegt - bei einer Übertragung über das ISDN-Netz gerechnet werden.

Zur Korrektur des zeitlichen Versatzes wird die Tatsache ausgenutzt, daß die Daten der Zeitkanäle in H.221-Rahmen und Mehrfachrahmen eingeordnet sind. Rahmen wiederholen sich nach 80 Bytes und Mehrfachrahmen wiederholen sich nach sechzehn Rahmen.

Die achten Bits der ersten sechzehn Bytes eines Rahmens bilden das Rahmenkennungssignal (vergl. die CCITT-Empfehlung H.221), das unter anderem das Rahmenkennungswort sowie die Nummer eines Rahmens bezogen auf den Beginn eines Mehrfachrahmens oder das Mehrfachrahmenkennungssignal enthält.

Zur Identifikation der Kennungssignale werden die Daten aller Kanäle in der oben angegebenen Reihenfolge in ein Register 11 für dreißig Byte übernommen. Ausgewertet werden diese Bits durch eine Erkennungsschaltung 13, 13A, 14, 15, 16 und 17, die über dreißig Verbindungen mit dem Register 11 gekoppelt ist. Über diese Verbindungen werden jeweils die achten Bits der im Register 11 gespeicherten Bytes übertragen.

Die Erkennungsschaltung besteht aus dreißig parallel betriebenen Schieberegistern 15, die jeweils sechzehn Stufen enthalten, also soviele Stufen, daß in ihnen jeweils das gesamte Kennungssignal eines H.221-Rahmens gespeichert werden kann.

Zunächst wird in diese Schieberegister 15 etwa alle 125 Mikrosekunden ein neues Bit eingelesen. Zu jedem dieser Schieberegister 15 ist eine Vergleichsschaltung 16 parallel geschaltet, die prüft, ob in dem zugeordneten Schieberegister 15 das Rahmenkennungswort enthalten ist.

Trifft dieser Fall für eines der Schieberegister 15 zu, wird sein gesamter Inhalt in ein zugeordnetes Leseregister 17 übernommen. Außerdem werden die untersten vier Stufen des zugeordneten Schreibzählers 6 über eine nicht gezeigte Leitung von der Vergleichsschaltung 16 zum Rücksetzeingang dieser Stufen auf null gesetzt. Gleichzeitig wird durch eine Sperrschaltung 13, 13A, 14 die Übernahme weiterer Bits in das betreffende Schieberegister für die nächsten 64 Schiebetakte unterbrochen. Die Sperrschaltung besteht aus einem 16-aus-80-Zähler 13, einem Flip-Flop 13A und einem Gatter 14.

Wegen der Wirkungsweise der Sperrschaltung wird der nächste Vergleich erst wieder nach achtzig Bytes ausgeführt. Danach erscheint - wenn der erste Vergleich zu einem positiven und zutreffendem Ergebnis geführt hat - wieder ein Rahmenkennungswort. In diesem Falle bleibt die Sperrschaltung wirksam und alle Vorgänge, die auf das erste positve Vergleichsergebnis erfolgten, wiederholen sich nun. Sollte der Vergleich zu einem negativen Ergebnis führen, wird die Wirkung der Sperrschaltung wieder aufgehoben und die Suche nach dem Rahmenkennungswort erneut gestartet. Über eine Interruptsteuerung 18 wird der Ablauf des Programms für den Systemprozessor 4 an das Vergleichsergebnis angepaßt.

Aus den dreißig Leseregistern 17 holt sich der Systemprozessor 4 die Rahmenkennungssignale für jeden Kanal, wertet sie aus und setzt über das Register 5 die restlichen 9 Stufen der Schreibzähler 6. Besteht Gleichlauf zwischen allen dreißig Schreibzählern 6, werden dreißig Bytes in der Reihenfolge des ursprünglich gesendeten Datenstromes in das Register 11 eingeschrieben; der Zeitversatz ist damit ausgeglichen.

Mit einem programmierbaren Schieberegister 12 wird der ursprünglich gesendete Datenstrom von den H.221-Rahmeninformationen befreit, so daß als Ausgangssignal der Schieberegister 11, 12 nur Audio- oder Videodaten auftreten. Die Maske zur Programmierung des Schieberegisters 12 ist im Konfigurationsregister 19 abgelegt.

Die Bausteine 20 bis 26 zeigen schematisch einen entsprechenden Coder, der serielle Videodaten 21a und serielle Audiodaten 21b mit Hilfe eines programmierbaren Schieberegisters 21 und eines Multiplexers 20 zu einem PCM-30-Signal zusammenfasst, das die gleiche Struktur hat, wie das empfangene PCM-30-Signal 1a. An das programmierbare Schieberegister sind 16-aus-80-Zähler 23 und 24 angeschlossen, sowie Register für das Einblenden der H.221-Rahmeninformation 22. Diese Rahmeninformationen werden vom Systemprozessor 4 in ein Schieberegister 25 eingeschrieben. Im Konfigurationsregister 26 ist die Maske zur Programmierung des Registers 21 abgelegt.

## Patentansprüche

1. Multiplexer für die Daten von Zeitkanälen, die kanalweise nach Rahmen und/oder Mehrfachrahmen strukturiert sind, mit
- Adressiermittel (6, 8), die für die Adressierung eines Hauptspeichers (3) vorgesehen sind, in den die Daten vorbestimmter Kanäle kanalweise geordnet eingeschrieben werden und ausgelesen werden,
- Detektiermittel (11, 13, 13A, 14, 15, 16), die dafür vorgesehen sind, in den Daten, die im Hauptspeicher (3) abgelegt sind, kanalweise die Rahmen und/oder Mehrfachrahmen zu detektieren,
**dadurch gekennzeichnet,**
**dass** die für das Einschreiben in den Hauptspeicher vorgesehenen Adressiermittel (6) im Falle der Detektion eines Rahmens in den Daten eines Kanals für diesen Kanal durch die Steuermittel (4, 5, 16) zum Setzen auf einen aus den Detektiermitteln abgeleiteten Stand vorgesehen sind.

2. Multiplexer nach Anspruch 1,
**dadurch gekennzeichnet,**
**dass** Schreibzähler (6) als Adressiermittel zum Setzen auf einen aus den Detektiermitteln abgeleiteten Stand vorgesehen sind.

3. Multiplexer nach Anspruch 2,
**dadurch gekennzeichnet,**
**dass** ein Teil des Detektiermittels eine Erkennungsschaltung (13, 13A, 14, 15, 16, 17) ist, und
**dass** die Erkennungsschaltung (13, 13A, 14, 15, 16, 17) zur Auswertung eines Rahmenkennungswortes vorgesehen ist.

4. Multiplexer nach Anspruch 3,
**dadurch gekennzeichnet,**
**dass** in der Erkennungsschaltung eine Vergleichsschaltung (16) zur Prüfung eines in mehreren Schieberegistern (15) enthaltenen Rahmenkennungswortes vorgesehen ist, und
**dass** die Erkennungsschaltung (13, 13A, 14, 15, 16, 17) eine Sperrschaltung (13, 13A, 14) enthält,
**dass** die Sperrschaltung (13, 13A, 14) zum Unterbrechen einer Übernahme weiterer Bits des Datenstromes in die zugeordneten Schieberegister (15) vorgesehen ist, falls die Prüfung der Vergleichsschaltung (16) zu einem positiven Ergebnis geführt hat, und
**dass** die Vergleichsschaltung (16) zur Aufhebung der Wirkung der Sperrung vorgesehen ist, falls die Prüfung der Vergleichsschaltung (16) zu einem negativen Ergebnis geführt hat.

5. Multiplexer nach Anspruch 4,
**dadurch gekennzeichnet,**
**dass** jeweils ein Leseregisrer (17), das Teil der Erkennungsschaltung *ist,* zur Übernahme des gesamten Inhalts des ihm zugeordneten Schieberegisters (15) vorgesehen ist, falls die Prüfung der Vergleichsschaltung zu einem positiven Ergebnis geführt hat, und
**dass** die Vergleichschaltung (16) zum Rücksetzen der untersten Stufen des Schreibzählers (6) vorgesehen ist, falls die Prüfung der Vergleichsschaltung (16) zu einem positiven Ergebnis geführt hat, und
**dass** die restlichen Stufen des Schreibzählers (6) durch Steuermittel (4,5) zum Setzen auf einen aus den Detektiermitteln abgeleiteten Stand vorgesehen sind.

6. Multiplexer nach Anspruch 5,
**dadurch gekennzeichnet,**
**dass** eine Interruptsteuerung (18) zur Anpassung des Ablaufs eines Programms für ein Steuermittel (4) an das Vergleichsergebnis vorgesehen ist.

7. Multiplexer nach Anspruch 1,
**dadurch gekennzeichnet,**
**dass** mehrere Bausteine (20 bis 26) zur Codierung serieller Videodaten (21a) und serieller Audiodaten (21b) vorgesehen sind.

8. Multiplexer nach Anspruch 7,
**dadurch gekennzeichnet,**
**dass** der Hauptspeicher (3) mehrere Seiten und eine Seite des Hauptspeichers mehrere Bytes enthält,
**dass** ein Lesezähler (8) als Adressiermittel vorgesehen ist, die die Auslesereihenfolge der Seiten aus den Hauptspeicher (3) so organisieren,
**dass** beim tiefsten Stand des Hauptspeichers (3) das erste Byte der ersten Seite des Hauptspeichers (3) ausgelesen wird, und
**dass** beim nächsthöheren Stand das erste Byte der zweiten Seite ausgelesen wird und so fort bis zum letzten Byte der letzten Seite.

## Claims

1. A multiplexer for the data of time channels which are structured channel by channel in frames and/or multiframes, comprising
- addressing means (6, 8) which are provided for addressing a main memory (3) in which the data of predefined channels are written in a channel-by-channel order and read out again,
- detecting means (11, 13, 13A, 14, 15, 16) which are provided for detecting in the data that are stored in the main memory (3) the frames and/or multiframes channel by channel,
**characterized in that** the addressing means (6) provided for writing in the main memory, if a frame is detected in the data of a channel, the control means (4, 5, 16) provides that the addressing means are set for this channel to a count derived from the detecting means.

2. A multiplexer as claimed in claim 1, **characterized in that** write counters (6) are provided as addressing means to set to a count derived from the detecting means.

3. A multiplexer as claimed in claim 2, **characterized in that** part of the detecting means is a recognition circuit (13, 13A, 14, 15, 16, 17) and **in that** the recognition circuit (13, 13A, 14, 15, 16, 17) is provided for evaluating a frame recognition word.

4. A multiplexer as claimed in claim 3, **characterized in that** the recognition circuit comprises a comparing circuit (16) for checking a frame codeword contained in a plurality of shift registers (15) and **in that** the recognition circuit (13, 13A, 14, 15, 16, 17) comprises an inhibit circuit, **in that** the inhibit circuit (13, 13A, 14) is provided for interrupting a transfer of further bits of the data stream to the assigned shift registers (15) if the check of the comparing circuit (16) has, led to a positive result, and **in that** the comparing circuit (16) is provided for canceling the effect of the inhibit circuit if the check by the comparing circuit (16) has led to a negative result.

5. A multiplexer as claimed in claim 4, **characterized in that** a respective read register (17) which forms part of the recognition circuit is provided for taking over the whole contents of the shift register (15) assigned thereto if the check of the comparing circuit has led to a positive result and **in that** the comparing circuit (16) is provided to reset the bottommost stages of the write counter (6) if the check of the comparing circuit (16) has led to a positive result and **in that** control means (4, 5) provides that the remaining stages of the write counter (6) are set to a count derived from the detecting means.

6. A multiplexer as claimed in claim 5, **characterized in that** an interrupt controller (18) is provided for adapting the routine of a program for a control means (4) to the result of the comparison.

7. A multiplexer as claimed in claim 1, **characterized in that** a plurality of modules (20 to 26) are provided for coding serial video data (21a) and serial audio data (21b).

8. A multiplexer as claimed in claim 7, **characterized in that** the main memory (3) has more than one page and a page of the main memory contains more than one byte, **in that** a read counter (8) is provided as an addressing means which organize the order in which the pages of the main memory (3) are read, so that at the lowest count of the main memories (3) the first byte is read from the first page of the main memory (3) and **in that** at the next-higher count the first byte is read from the second page and so on up to the last byte from the last page.

## Revendications

1. Multiplexeur pour les données de canaux temporels qui sont structurées en cadres et/ou en cadres multiples par canal avec:
- des moyens d'adressage (6,8) prévus pour l'adressage d'une mémoire principale, dans lesquels les données de canaux préalablement déterminés sont enregistrées et lues en étant classées par canal
- des moyens de détection (11, 13, 13A, 14, 15, 16) prévus pour détecter les cadres et/ou les cadres multiples par canal dans les données enregistrées dans la mémoire principale (3),
**caractérisé en ce**
**que** les moyens d'adressage (6) pour l'enregistrement dans la mémoire principale en cas de détection d'un cadre dans les données d'un canal sont prévus pour ce canal par les moyens de commande (4, 5, 16) pour amener dans un état dérivé des moyens de détection.

2. Multiplexeur selon la revendication 1,
**caractérisé en ce que** les compteurs d'écriture (6) sont prévus comme des moyens d'adressage pour amener dans un état dérivé des moyens de détection.

3. Multiplexeur selon la revendication 2,
**caractérisé en ce qu'**une partie du moyen détecteur est un circuit de reconnaissance (13, 13A, 14, 15, 16, 17) et
que le circuit de reconnaissance (13, 13A, 14, 15, 16, 17) est prévu pour l'évaluation d'un mot indicateur de cadre.

4. Multiplexeur selon la revendication 3,
**caractérisé en ce qu'**un circuit de comparaison (16) est prévu dans le circuit de reconnaissance pour le contrôle d'un mot indicateur de cadre contenu dans plusieurs registres à tiroir (15) et que le circuit de reconnaissance (13, 13A, 14, 15, 16, 17) contient un circuit de blocage (13, 13A, 14)
que le circuit de blocage (13, 13A, 14) est prévu pour l'interruption d'une prise en charge de bits supplémentaires du flux de données dans les registres à tiroir (15) affectés si le contrôle du circuit de comparaison (16) a conduit à un résultat positif et
que le circuit de comparaison (16) est prévu pour la levée de l'action du blocage si le contrôle du circuit de comparaison (16) a conduit à un résultat négatif.

5. Multiplexeur selon la revendication 4,
**caractérisé en ce qu'**un registre de lecture (17) qui fait partie du circuit de reconnaissance est respectivement prévu pour la prise en charge du contenu total du registre à tiroir (15) qui lui est affecté si le contrôle du circuit de comparaison a conduit à un résultat positif et que le circuit de comparaison (16) a conduit à la réinitialisation des étages inférieurs du compteur d'écriture (6) si le contrôle du circuit de comparaison (16) a conduit à un résultat positif et
que les autres étages du compteur d'écriture (6) sont prévus par des moyens de commande (4,5) pour amener dans un état dérivé des moyens de détection.

6. Multiplexeur selon la revendication 5,
**caractérisé en ce qu'**une commande d'interruption (18) est prévue pour l'adaptation du déroulement d'un programme pour un moyen de commande (4) au résultat de la comparaison.

7. Multiplexeur selon la revendication 1,
**caractérisé en ce que** plusieurs éléments (20 à 26) sont prévus pour le codage de données vidéo (21a) série et de données audio (21b) série..

8. Multiplexeur selon la revendication 7,
**caractérisé en ce que** la mémoire principale (3) contient plusieurs pages et une page de la mémoire principale plusieurs bytes,
qu'un compteur de lecture (8) est prévu comme moyen d'adressage qui organise l'ordre de lecture des pages de la mémoire principale (3) de telle sorte
qu'au niveau le plus bas de la mémoire principale (3), le premier byte de la première page de la mémoire principale (3) est lu et
qu'au niveau suivant, le premier byte de la deuxième page est lu et ainsi de suite jusqu'au dernier byte de la dernière page.
